# EUROPEAN PATENT SPECIFICATION

(11) **EP 4 547 007 B1**
(45) Date of publication and mention of the grant of the patent: **27.05.2026**
(21) Application number: 23739374.9
(22) Date of filing: 27.06.2023
(51) Int. Cl.: A01F 15/18

(54) **BALER**
BALLENPRESSE
PRESSE À BALLES

(30) Priority: 30.06.2022 IT 202200013816
(43) Date of publication of application: 07.05.2025
(73) Proprietor: Kverneland Group Ravenna S.r.l., 48026 Russi (RA) (IT)
(72) Inventor: BOTTI, Francesco, 48022 Lugo (RA) (IT); FRASCELLA, Cosimo, 48022 Lugo (Ravenna) (IT)
(74) Representative: Conti, Marco
(86) International application number: PCT/IB2023/056620
(87) International publication number: WO 2024/003736

(56) References cited:
- DE-U1- 202014 003 633
- US-A- 4 428 282
- US-A- 5 097 760

## Description

### Technical field

This invention relates to a baler and a method for forming round bales.

### Background art

Round balers are the most common type of agricultural balers which can be connected to rear part of a machine, such as a tractor, for picking up previously cut crops such as rice straw, grass, wheat, maize, and the like (hereinafter referred to as "hay") from the ground and for forming a bale out of the hay and discharge it onto the field. Typically, balers have a feeding unit to pick up the hay from the ground, a compression chamber to form the round bale and a rotor apparatus to feed the hay picked-up from the ground to the compression chamber of the baler. The compression chamber can have a fixed or gradually increasing volume. In case the baler has a variable volume, the compression chamber is delimited by a plurality of belts which form a loop and move continuously around the compression chamber. The plurality of belts is driven by a plurality of guide rollers. In particular, a part of each belt is stretched between two consecutive guide rollers and the belt which is stretched between the two rollers must deform with the arrival of the hay in order to conform to the shape of the round bale which is being formed inside the compression chamber.

An example of known round balers is described by patent documents FR2811654B1 and EP0840545B1. However, traditional balers have some disadvantages and can be improved. For example, lifetime of some parts of the baler, such as guide rollers and belts, is not sufficiently long which reduces reliability negatively affects performance of the baler. Moreover, in this sector, it is desired to provide a baler with higher flexibility which can be adapted to different crop material and different bale dimensions.

In balers, the belts are wound around the plurality of guide rollers to define the compression chamber. Therefore, the position of the guide rollers determines the path of the belts. Some of the rollers of the plurality of guide rollers are movable.

Moreover, balers generally have a tensioning system for maintaining constant tension on the belts and releasing the amount of belt required to grow the bale. Normally, there are two rigid parallel tensioning arms between them articulated at one point and having a series of rollers at the opposite point where the belts are rolled up. Moreover, actuators and tensioning means are used to control the upward and downward movement of the arms in order to control the tension in the belts during formation and unloading of the bale. In particular, the movable guide rollers are placed on the tensioning arms of the tensioning system. Consequently, the moveable rollers move as a result of the upwards or downwards movement of the arms, to deform the path of the belts. Therefore, when the hay enters the baler and contacts a portion of the belts, the belts are bent due to the force exerted on them by the bale which is being formed and the tensioning arm starts to move upwards. As a result of the upwards movement of the tensioning arm, the movable guide rollers are moved to deform the path of the belts and to release the amount of belt which is required for forming the bale inside the compression chamber. In this context patent documents EP1588605B1, EP3298881B1, US5622104A, EP0234634B1, US4257219A, EP2661953A1 and EP3366110A1 describe known balers having tensioning systems for controlling bale density in the baler, having actuators which enable the tensioning arms to move upwards and downwards, where the actuator can be driven hydraulically or electrically.

However, it is desirable to provide a round baler having a tensioning system with enhanced robustness, reliability and economic efficiency which provides the belts and consequently the bale with a desired amount of pressure.

Another aspect of traditional round balers which needs to be improved is the feeding section of the baler. As explained earlier, the feeding unit of the baler gathers the hay from the ground and conveys it through a rotor, into the compression chamber within the baler. The feeding unit usually includes a pick-up unit located near the front of the baler which picks up the hay and feeds it into the compression chamber. Moreover, above the pick-up unit there is a windguard assembly. It ensures that the hay is properly fed into the baler. Typically, the windguard assembly consists of a pipe and a series of windguard tines fixed to the pipe and held in position above and in front of the pick-up unit. Some examples of known baler feeding units are described in patent documents EP1348330B1, EP2101557B1, US6877304B1, and US2021274716. However, it is required to provide a feeding unit with enhanced ability to convey the hay into the compression chamber and therefore contributes to a better bale formation.

Another problem with regard to round balers is that during the function of a baler, baling material and other material, such as mud, dirt, baling material residue, etc., can be deposited on the rollers and the compression chamber and as a result lower the efficiency of the rollers and other moving parts. Scraper devices are often used in round balers which interact with the moving parts of the round baler in order to prevent or to remove existing adhesions or deposits. In this context, documents EP3222134B1 and US10405495B2 describe known examples of scraper devices used in round balers.

Another problem with regard to the traditional round balers is that when the belts are no longer tensioned, the belts of the plurality of belts become slack and can be misaligned within the bale forming chamber, which increases friction between the belts and diminishes baler performance. Normally, a belt guide is used to guide the position of the belt to maintain the proper alignment of the belts.

In this context, an example of known belt guides is disclosed by patent document US4428282A.

However, such a solution has some drawbacks and can be improved. For example, one of the problems that the traditional belt guides confront is that displacement of the belts can create vibration which negatively impacts the baler performance.

### Disclosure of the invention

Scope of the present invention is to provide a baler, and a method that overcome at least one of the aforementioned drawbacks.

This scope is achieved by the baler for forming round bales of crops, and the method for forming round bales according to the appended claims. The baler includes a frame. The frame provides an internal volume. The baler includes also a feeding unit. It is to be mentioned that the feeding unit according to the present description can be used in different agricultural machines, for example loader wagon, merger machine, balers, etc. The feeding unit is attached to the frame. The feeding unit is configured for picking up hay from the ground and for feeding it into the baler. The feeding unit has an inlet and outlet. The inlet of the feeding unit faces the ground. Moreover, the outlet of the feeding unit is placed inside the baler. In particular, the outlet of the feeding unit faces the internal volume.

The baler also includes a compression chamber. The compression chamber is configured for compressing the hay to form the bale. The compression chamber is of a variable diameter. Moreover, the hay is fed to the compression chamber from the outlet of the feeding unit in a feeding direction.

The baler also includes a plurality of guide rollers. The plurality of guide rollers is placed inside the internal volume. In an example, the plurality of guide rollers includes a pair of entrance rollers.

The baler includes a plurality of belts. In an example, the belts of the plurality of belts are placed side by side in the internal volume. The plurality of belts is wound around the guide rollers so to define an endless loop. In particular, the loop is flexible for delimiting the compression chamber. The guide rollers are rotatable for driving the belts around the loop. In a preferred example, an entrance portion of the loop between the entrance rollers is transversal to the feeding direction. Moreover, in an example, the entrance portion of the loop is located at the outlet of the feeding unit so that the hay contacts the entrance portion of the loop upon entering the internal volume.

In an example, the entrance rollers are two consecutive rollers. In other words, there are no other guide rollers between the pair of entrance rollers, and the entrance portion of the belt is stretched between the entrance rollers. The entrance portion of the belt lays in a plane which includes the entrance rollers. The plane in which the entrance portion and the entrance rollers lay, is transversal to the feeding direction.

The baler has a tensioning system. The tensioning system is configured for applying a tension to the belts so to generate a corresponding pressure on the hay contained inside the compression chamber. The tensioning system can include a first tensioning arm and a second tensioning arm. The first tensioning arm and the second tensioning arm are articulated to the frame. The first and the second tensioning arms are configured to move between a bale starting position, where the formation of the bale is being started, and a full bale position, where a complete bale is formed inside the compression chamber. In an example, the tensioning system is configured for adjusting the tension of the belts to a tensioning set point. In an example, the baler includes a control unit. The control unit is connected to the tensioning system. The control unit can be programmed for automatically setting the tensioning of the belts to a start value, with the tensioning arms being in the bale starting position. Moreover, the control unit can be configured for automatically increasing the tensioning of the belts to reach the tensioning set point. In an example, the control unit is configured for automatically increasing the tensioning of the belts to reach the tensioning set point responsive to a predetermined swivel angle of the first and the second tensioning arms around an articulation point as the arms move upwards during bale formation. The articulation point is the point where the first and the second tensioning arms are articulated to the frame of the baler.

As explained earlier, the baler has a configuration in which the hay contacts the tensioned belts between the entrance rollers; therefore, the tensioning of the belts at the entrance would make it difficult for the bale core to be formed inside the compression chamber. Therefore, the control unit is programmed to automatically set the tensioning of the belts to a start value when the tensioning arms are in the bale starting position. In an example, the start value is near-zero tension. Therefore, the bale core can be correctly formed inside the chamber. Moreover, the control unit is programmed for automatically increasing the tensioning of the belts to reach the tensioning set point responsive to a predetermined swivel angle of the tensioning arms around an articulation point as the arms move upwards during bale formation. Therefore, as the bale is being formed, the tensioning arms move upwards and when the swivel angle of the arms reaches the predetermined, which means that the core formation is over, the control unit changes the tensioning of the belts to the setpoint value selected by the operator.

In an example, the baler includes a feeding roller. The feeding roller is placed between the outlet of the feeding unit and the entrance rollers. The feeding roller is configured to push the hay towards the compression chamber in order to contribute to the feeding of the hay to the compression chamber. Therefore, placing the feeding roller upstream of the entrance rollers allows to efficiently feed the hay to the compression chamber.

Furthermore, each of the first tensioning arm and the second tensioning arm has a first end and a second end. The first arm and the second arm are articulated to the frame at the first end of the arm. In an example, the first arm and the second arm are articulated to the frame at the first end of the arm in a way that the arm is distant from the plurality of guide rollers with respect to an advancing direction of the baler.

The plurality of guide rollers includes a first guide roller, a second guide roller and a third roller. The first, the second and the third rollers may be placed at a higher altitude with respect to the articulation point between the arm and the frame. Moreover, each of the first tensioning arm and the second tensioning arm has a first arm roller at the second end thereof. Each of the first tensioning arm and the second tensioning arm has a second arm roller, placed between the first and the second end of the arm. In an example, the first and the second arm rollers are configured to cooperate with the plurality of guide rollers placed at an altitude higher with respect to that of the articulation point between the arm and the frame, where the belts are rolled up. In an example, the first arms roller and the second arm roller are configured to cooperate with the first, the second and the third roller so that the belts are stretched between
the first guide roller and the first arm roller;
the first arm roller and the second guide roller;
the second guide roller and the second arm roller,
the second arm roller and the third guide roller.

In an example, the second and the third guide rollers are placed between the first end and the second end of the arm along the advancing direction.

Therefore, it is possible to obtain bales of a larger size, by providing the configuration explained above.

Moreover, the at least one guide roller can be displaceable in order to obtain a larger compression chamber. Therefore, it is possible to increase flexibility of the baler.

Moreover, the control unit can be configured to modify the tensioning of the belts in a range between a low value and high value. The control unit is configured to modify the tensioning of the belts in response to setpoints which are selectable by the operator. Furthermore, the control unit is programmed for automatically setting the tensioning of the belts at a start value which is lower than the low value.

In an example, the control unit is configured to modify the tensioning of the belts through a proportional valve.

In an example, the width of each belt of the plurality of belts is at least 230 mm.

Moreover, the plurality of belts includes four belts.

The compression chamber can have a width equal to 1542 mm (5 ft).

In another example, the plurality of belts includes 5 belts.

The baler comprises a belt divider. The belt divider is configured to divide each belt of the plurality of belts from the adjacent one. Moreover, the belt divider has divisions which correspond in number to the number of the plurality of belts. In an example, each belt of the plurality of belts lays in a plane which is oriented longitudinally so that the plurality of belts, when stretched between the plurality of rollers, are oriented along a longitudinal direction. In a preferred example, at least a part of the belt divider is movable in a direction parallel and transversal to the longitudinal direction. Therefore, in case there is a misalignment of any of the belts of the plurality of belts, the at least a part of the belt divider displaces accordingly, which allows for a minimum displacement in the case of instability of the belt. Therefore, according to the belt divider of the present description, it is possible to prevent possible misalignment of the belts of the plurality of belts and to stabilize the oscillations due to displacement of the belts. Moreover, since a part of the belt divider is movable, it is less likely that the hay and other material deposit on the surface of the belt divider.

In an example, the belt divider comprises a fixed portion. The belt divider also comprises a movable portion. In a preferred example, the fixed portion is a bar. The bar is fixed to the frame. The bar extends along the transversal direction between a first end and a second end. Moreover, in an example, the movable part is a comb. The comb is movably connected to the bar. In an example, the comb is movably connected to the bar at a central part thereof. The movable part of the belt divider is configured to slide with respect to the fixed bar. Furthermore, if n equals number of belts, the belt divider has N teeth wherein N=n+1. In an example, the movable portion of the belt divider includes N-2 teeth.

In an example, the at least one part of the belt divider is configured to have a free motion as a result of displacement of the belts of the plurality of belts and without further driving force.

The baler further includes chains. The chains run over the guide rollers. In an example, the internal side of the chain next to the rollers is lubricated with lubrication liquid so that the lubrication liquid is distributed over the entire chain due to the centrifugal force. Moreover, in an example, the internal side of the chain which is next to the rollers and upstream of the roller with respect to the rotation of the chain relative to the roller, is lubricated with the lubrication liquid. As a result, lubrification of the chains is enhanced which improves performance and lifetime of the baler since wear and possible vibrations are lowered.

The baler can further include a scraper roller. The scraper roller is placed next to the guide rollers. In an example, the scraper roller has augers at lateral parts. Moreover, the scrape roller is configured for cleaning the guide rollers from the hay.

In an example, the scraper roller has a scraper wing. The scraper wing is attached to the scraper roller between the augers. The scraper wing projects from the surface of the scraper roller for cleaning the guide rollers from the hay.

In an example, the scraper wing consists of lateral parts and a central part. The lateral parts can be extensions of the augers. The central part is placed on the scraper roller between the lateral parts. In an example, the central part projects from the surface of the roller in a direction different from projecting direction of the lateral parts.

In a preferred example, the lateral parts and the central part of the scraper wing form a 180° angle.

The tensioning system includes a first and a second actuator. The first and the second actuators are associated with the first and the second tensioning arm respectively. Moreover, the first and the second actuators are configured to regulate the movement of the first and the second arm to adjust the tension of the belts according to predetermined setpoints for each layer of the bale. The tensioning unit also comprises an elastic unit. In an example, the elastic unit of the tensioning system includes a couple of fluid accumulators. The accumulators have a gas volume. In an example, the gas is nitrogen. Moreover, the accumulators function responsive to the movement of the arms so that the gas expands when the tensioning arms are lowered and the actuator is shortened, and the gas is compressed when the actuator is elongated, and the arms are lifted. In particular, the actuators are configured for applying resistance on the belts as the tensioning arms as they move upwards due the bale formation inside the compression chamber.

In an example, the accumulator is a membrane accumulator. In particular, in the membrane accumulator, a membrane is used as partition between the fluid side and the gas side of the accumulator. The membrane can be deformed when pressed by the gas or fluid. In another example, the actuator can have a rigid septum which separates gas from fluid. The septum can be displaced through an actuator to move towards or away from the gas side in order to compress or expand the gas.

In an example, the actuator is a hydraulic cylinder. In an example, the accumulator is connected to a passive piston-cylinder assembly to form the elastic unit. the elastic unit is configured to keep the tensioning arms in the lowered position after baler release, therefore, in absence of external force, the tensioning arms are brought back to the lowered position by the elastic unit.

Alternatively, the accumulator is integrated into a passive piston-cylinder assembly to form the elastic unit The tensioning system according to the above-mentioned configuration can provide the desired amount of tension on the bale during the bale formation and bring back the tensioning arms to the lowered position after bale release in a simple and economic efficient way.

In an example, the first and the second tensioning arms are coupled together. Moreover, the tensioning arms are displaceable in their position in a synchronized way.

The feeding unit includes a pick-up unit. The pick-up unit is configured to rotate in a direction opposite to the direction of travel of the baler for sweeping the hay upwardly. The feeding unit can also include a windguard assembly. In an example, the windguard assembly is placed above the pick-up unit. In particular, the windguard assembly is configured for ensuring proper feeding of the hay into the baler.

The windguard assembly includes a frame. The windguard assembly can also include a pair of windguard arms. In an example, the windguard arms are pivotably fixed to the frame.

Moreover, the windguard assembly includes a windguard pipe. In an example, the windguard pipe is fixed between the windguard arms. The windguard pipe extends along a longitudinal axis between a first end and a second end.

The windguard assembly includes a plurality of rake tines. The plurality of rake tines (tines) is fixed to the pipe. Ina n example, the rake tines of the plurality of rake tines are spaced from each other. Moreover, the plurality of rake tines projects towards the baler. The rake tines are the plurality of rake tines are distributed on the windguard pipe between the first and the second end thereof. Each rake tine of the plurality of rake tines has a free tip. Each rake tine has also an end which is fixed to the windguard pipe.

In an example, the plurality of rake tine includes a first rake tine and a second rake tine. The first rake tine has a first inclination with respect to the ground. The second rake tine has a second inclination with respect to the ground. In an example, the second inclination is greater than the first inclination so that the tip of the second tine is located at a higher altitude from the ground with respect to the tip of the first tines.

Therefore, it is possible to feed the hay picked up from the ground to the compression chamber of the baler in an enhanced way because due to the above-mentioned configuration of the rake tines, the hay is pushed towards the compression chamber and an improved bale core formation can be expected.

In an example, the plurality of tines includes lateral tines and internal tines. The lateral tines are placed at the first end and the second end of the pipe. The internal tines are positioned in a central portion of the pipe. In an example, the lateral tines have the first inclination, and the central tines have the second inclination.

Moreover, the plurality of tines can include intermediate tines. The intermediate tines are placed between the lateral tines and the central tines. The intermediate tines have a third inclination. In an example, the third inclination is greater than the first inclination and smaller than the second inclination.

The windguard assembly can further include a rotating windguard cylinder. The rotating windguard cylinder is fixed between the windguard arms. Moreover, the rotating windguard cylinder is placed below the windguard pipe.

In an example, the feeding unit includes a rotor. The rotor has a plurality of feeding blades. Each feeding blade of the plurality if feeding blades has a plurality of fins.

In an example, the rotor is placed downstream of the pick-up unit. In particular, the rotor is placed in a way that the rotor and the pick-up unit are aligned.

Moreover, in an example, both the rotor and the pick-up unit rotate in a direction which is opposite to the rotation direction of wheels of the baler when the baler advances along said direction of travel. According to such a configuration, the hay which is picked from the ground from the pick-up unit to the rotor and from the rotor to the compression chamber in a way that the picked-up hay is moved upwards due the rotation direction of the pick-up unit and the rotor and contacts the plurality of rake tines.

In another example, the rotor can be placed downstream of the pick-up unit to transfer the hay from the pick-up unit to the compression chamber, in a way that the rotor and the pick-up unit are installed on two distinct frames. Alternatively, the rotor and the pick-up unit can be connected to the same frame. Moreover, in an example, the rotor can be configured to rotate in a direction similar to the rotation direction of the wheels of the baler when the baler advances along said direction of travel. Therefore, in such an example, the pick-up unit rotates in a direction which is opposite to the rotation direction of wheels of the baler when the baler advances along said direction of travel while the rotation direction of the pick-up unit is opposite to that of the rotor.

The plurality of rake tines of the feeding unit is configured to cooperate with the pick-up unit, the rotor, and the entrance portion of the loop to form a pre-chamber prior to the compression chamber, where the hay is prepared to be transferred to the compression chamber to form the bale.

As a result, the hay is pushed towards the compression chamber in an enhanced way and the bale core formation is improved. The feeding unit can be used in different agricultural machines, for example loader wagon, merger machine, balers, etc.

A method for forming round bales comprises a step of providing a baler with a plurality of guide rollers placed inside an internal volume of the baler. The guide roller can include a pair of entrance rollers.

The method also includes a step of placing a plurality of belts in the internal volume. In an example the belts are placed side by side in the internal volume. The method includes a step of winding the belts around the guide rollers so as to define an endless loop. The loop is flexible for delimiting a compression chamber. The method includes a step of rotating the guide rollers for driving the belts around the loop. Moreover, the method includes a step of feeding the hay into the compression chamber of the baler. The hay is fed to the compression chamber through a feeding unit. The hay is fed to the compression chamber in a feeding direction. Moreover, in an example, the hay is fed to the compression chamber in a way that the hay contacts an entrance portion of the loop upon entering the internal volume. The entrance portion of the loop is transversal to the feeding direction and stretched between the entrance rollers.

The method comprises a step of applying a tension to the belts so to generate a corresponding pressure on the hay contained inside the compression chamber. The method can also include step of adjusting the tension of the belts to a tensioning set point. The method includes a step of compressing the hay to form the bale in the compression chamber.

In an example, the method includes a step of moving a pair of tensioning arms between a bale starting position, where the formation of the bale is being started, and a full bale position, where a complete bale is formed inside the compression chamber.

Moreover, the method includes a step of automatically setting the tensioning of the belts to a start value. The step of automatically setting the tensioning of the belts to a start value is carried out when the tensioning arms are in the bale starting position. Moreover, the method includes a step of automatically increasing the tensioning of the belts to reach the tensioning set point. In an example, the tensioning of the belts is automatically increased to reach the tensioning set point responsive to a predetermined swivel angle of the tensioning arms around an articulation point as the arms move upwards during bale formation. The articulation point is the point where the tensioning arms are articulated to the frame of the baler.

The method can include a step of pushing the hay towards the compression chamber through a feeding roller in order to enhance the movement of the hay from the feeding unit to the compression chamber in the feeding direction.

Moreover, the method comprises a step of articulating each of the first tensioning arm and the second tensioning arm at a first end of the arm to a frame of the baler. The first and the second arms are articulated to the frame of the baler in a way that the arm is distant from the plurality of guide rollers with respect to an advancing direction of the baler.

In an example, the method comprises a step of displacing at least one guide roller of the plurality of the guide rollers at top part of the internal volume, in order to obtain a larger compression chamber.

The method also includes a step of modifying the tensioning of the belts in a range between a low value and high value. The tensioning of the belts is modified between the low value and the high value in response to setpoints. The setpoints are selected by the operator. In an example, the method includes a step of automatically setting the tensioning of the belts at a start value. The start value is lower than the low value.

In an example, tensioning of the belts is regulated through a proportional valve.

The method includes a step of dividing each belt of the plurality of belts from the adjacent one through a belt divider. The belt divider has divisions which correspond in number to the number of the plurality of belts.

Ina n example, the method comprises a step of placing each belt of the plurality of belts in a plane which is oriented longitudinally so that the plurality of belts, when stretched between the plurality of rollers, are oriented along a longitudinal direction.

In an example, at least a part of the belt divider is movable in a direction parallel and transversal to the longitudinal direction.

Moreover, the method includes a step of running chains over the guide rollers. The method includes a step of applying lubrication liquid to the internal side of the chains, next to the guide rollers so that the lubrication liquid is distributed over the entire chain due to the centrifugal force.

In particular, the method includes a step of lubricating the internal side of the chain next to the rollers and upstream of the roller with respect to the rotation of the chain relative to the roller with the lubrication liquid.

In an example, the method includes a step of cleaning the guide rollers from the hay through a scraper roller. The scraper roller is placed next to the guide rollers. The scraper roller can be provided with augers at lateral parts. Moreover, the scraper roller has a scraper wing. The scraper wing is attached to the roller between the augers. The scraper wing projects from the surface of the roller for cleaning the guide rollers from the hay.

The method includes a step of moving the first and the second arm in an upward direction during bale formation and in a downward direction after bale release. The method also includes a step of regulating the movement of the actuators through a couple of fluid accumulators to adjust the tension of the belts according to predetermined setpoints for each layer of the bale. The fluid accumulators have a gas volume. The movement of the actuators is regulated in a way that the gas is expanded when the tensioning arms are lowered and the actuator is shortened, and the gas is compressed when the actuator is elongated, and the arms are lifted.

Moreover, the method includes a step of integrating the accumulator into a passive piston-cylinder assembly to form an elastic unit. Alternatively, the method can include a step of connecting the accumulator to a passive piston-cylinder assembly to form the elastic unit.

In an example, the method includes a step of providing the arms with a first arm roller and a second arm roller. In an example, the first arm roller is placed at a second end of the arms. Moreover, the second arm roller is placed between the first end and the second end of the arms.

The method can include a step of placing the belts around the internal volume in a way that the first and the second arm rollers cooperate with the plurality of guide rollers which are placed at an altitude higher with respect to that of the articulation point between the arm and the frame, where the belts are rolled up.

In addition, the method includes a step of moving the arms in a synchronized way.

A method for feeding hay picked-up from the ground to a baler comprises a step of rotating a pick-up unit of a feeding unit in a direction opposite to the direction of travel of the baler for sweeping the hay upwardly. The method also includes a step of placing a windguard assembly above the pick-up unit for ensuring proper feeding of the hay into the baler. Moreover, in an example, the method includes a step of pivotably fixing a pair of windguard arms to a frame of the windguard assembly.

The method can include a step of fixing a windguard pipe between the windguard arms. The windguard pipe extends along a longitudinal axis between a first end and a second end.

The method can also include a step of fixing a plurality of rake tines to the pipe. The rake tines of the plurality of rake tines are fixed to the pipe in a way that the tines are spaced from each other. Moreover, the rake tines are fixed to the pipe in a way that the rake tines project towards the baler.

In an example, the method includes a step of distributing the tines on the pipe between the first and the second end thereof. The tines are distributed on the pipe such that a first rake tine of the plurality of rake tine has a first inclination with respect to the ground and a second rake of the plurality of rake tines has a second inclination with respect to the ground. In an example, the second inclination is greater than the first inclination. The rake tines are distributed on the pipe so that the tip of the second tine is located at a higher altitude from the ground with respect to the tip of the first tines.

The method can include a step of placing lateral tines on the pipe at the first end and the second end thereof. The method includes a step of placing internal tines at a central portion of the pipe. In an example, the lateral tines have the first inclination, and the central tines have the second inclination.

The method can have a step of placing intermediate tines between the lateral tines and the central tines. the intermediate tines have a third inclination. In an example, the third inclination is greater than the first inclination. In an example, the third inclination is smaller than the second inclination.

The method has a step of fixing a rotating windguard cylinder between the windguard arms. In an example, rotating windguard cylinder is placed below the windguard pipe.

The method includes a step of placing a rotor downstream of the pick-up unit. The rotor has a plurality of feeding blades. Each blade has a plurality of fins. The rotor is placed in a way that the rotor and the pick-up unit are aligned.

In an example, the method includes a step of rotating both the rotor and the pick-up unit in a direction which is opposite to the rotation direction of wheels of the baler when the baler advances along said direction of travel.

### Brief description of drawings

This and other features will become more apparent from the following detailed description of a preferred, non-limiting example embodiment of it, with reference to the accompanying drawings, in which:

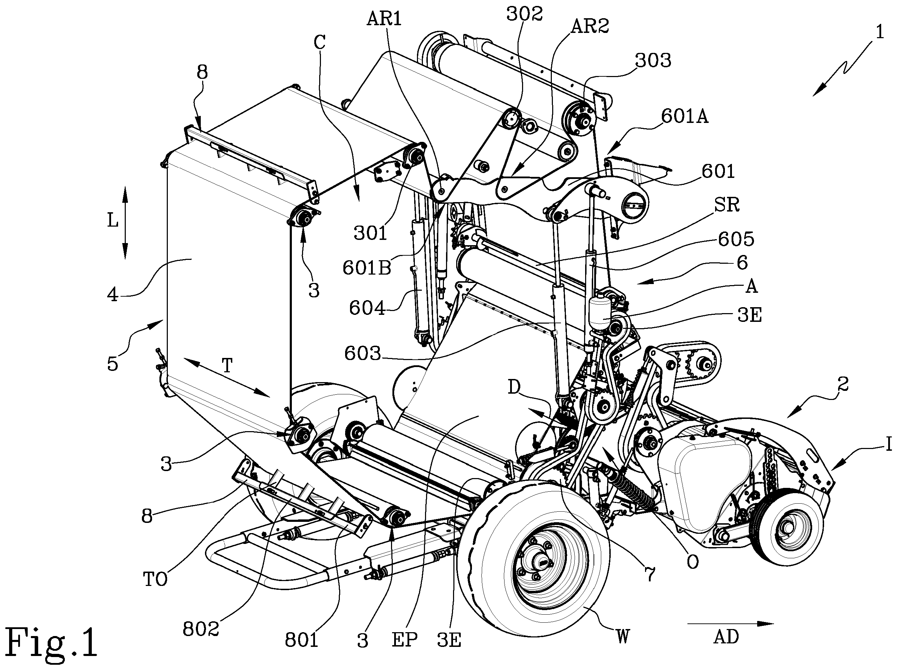

- figure 1 illustrates a baler for forming round bales;

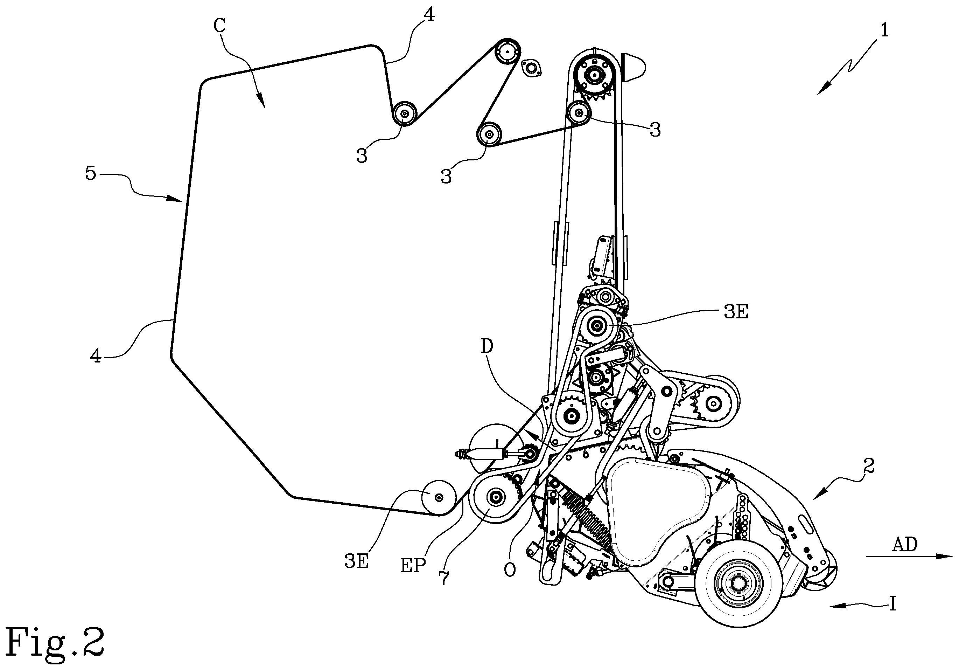

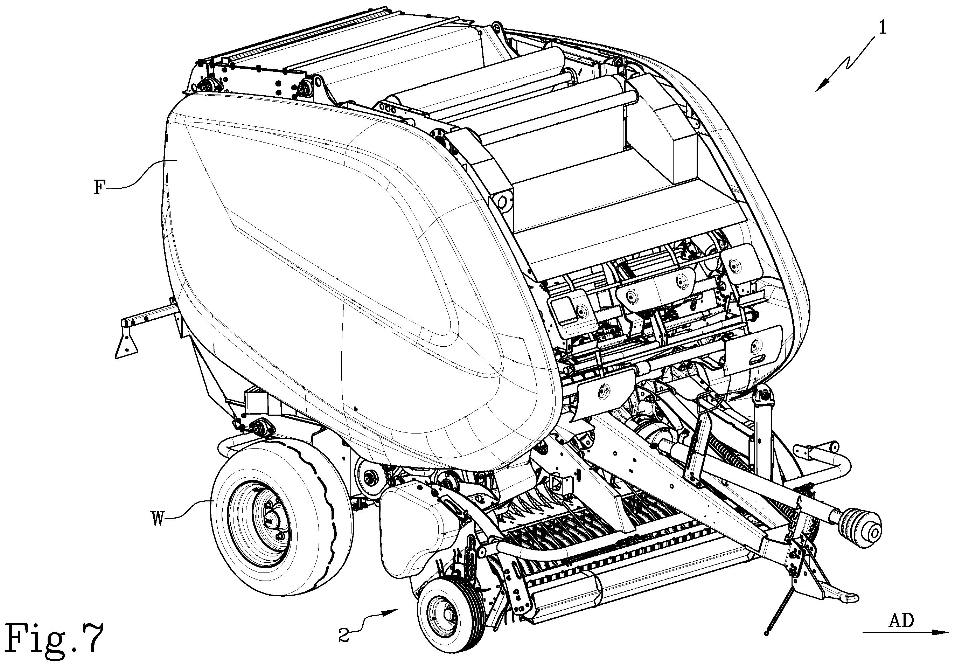

- figures 2 and 7 respectively illustrate a side and a perspective view of the baler;

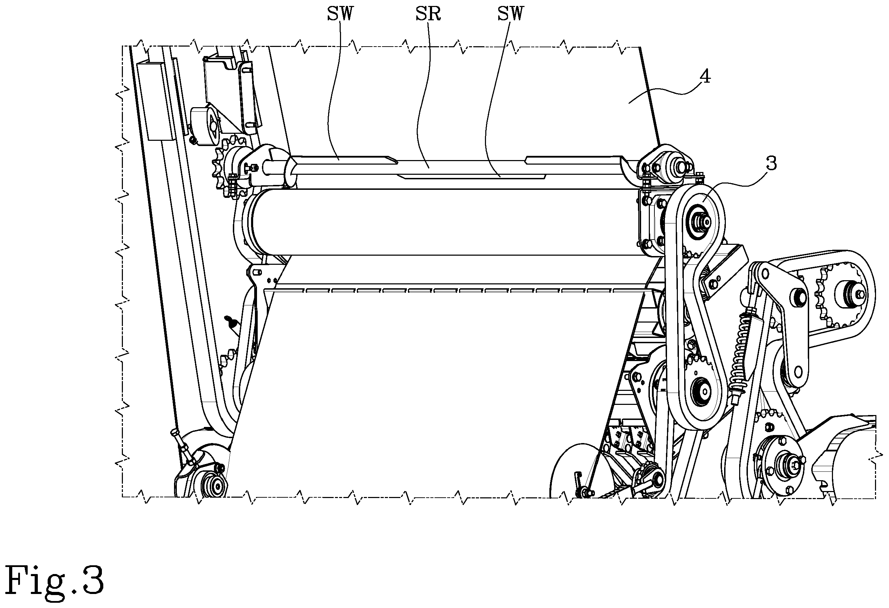

- figure 3 illustrates a section of the compression chamber of the baler;

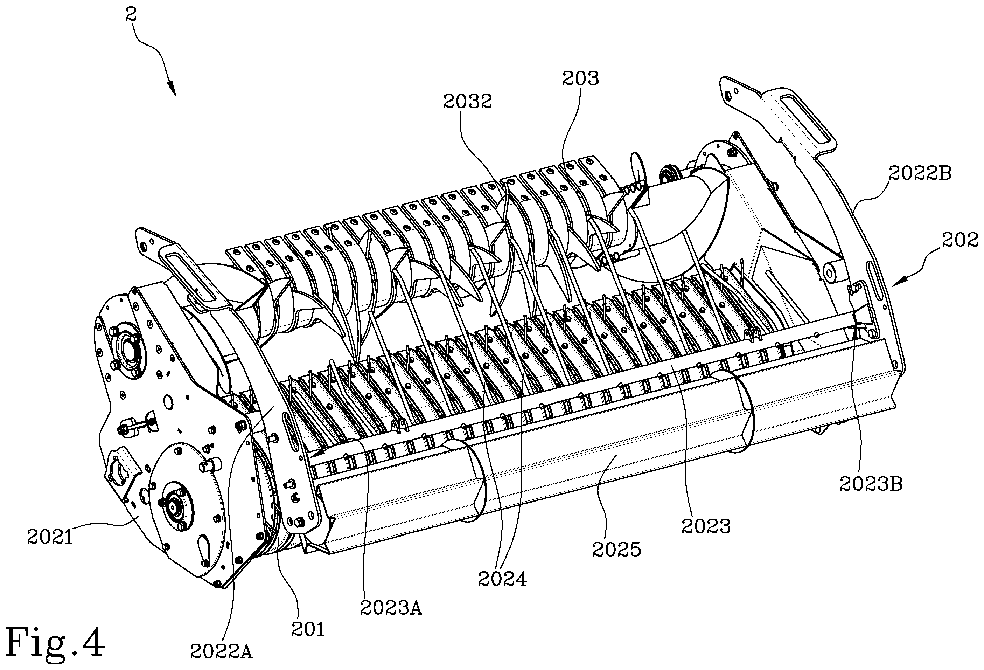

- figure 4 illustrates a feeding;

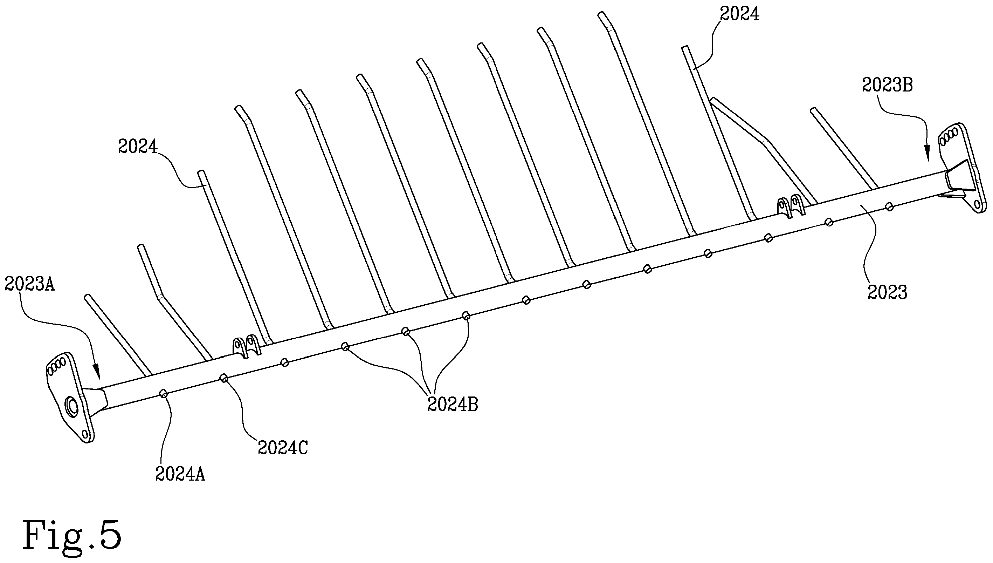

- figure 5 illustrates rake tines of the feeding unit,

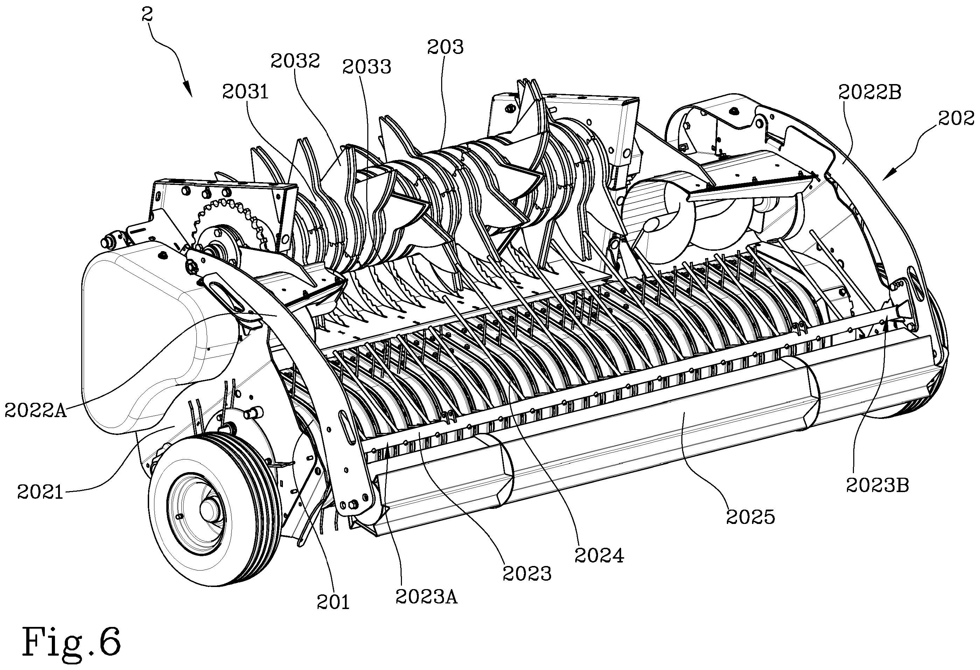

- figure 6 illustrates a different configuration of the feeding unit,

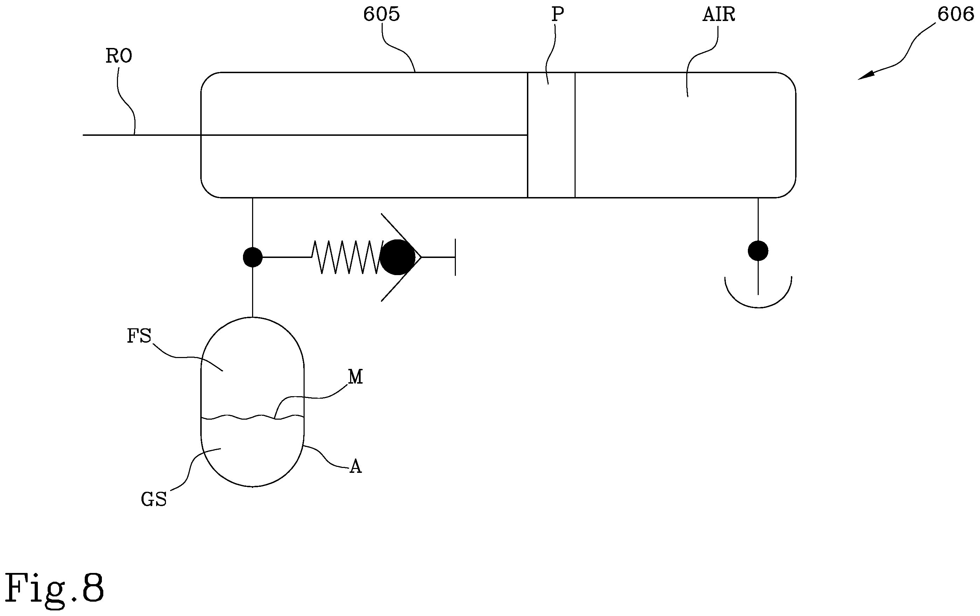

- figure 8 illustrates an elastic unit of the tensioning system of the baler,

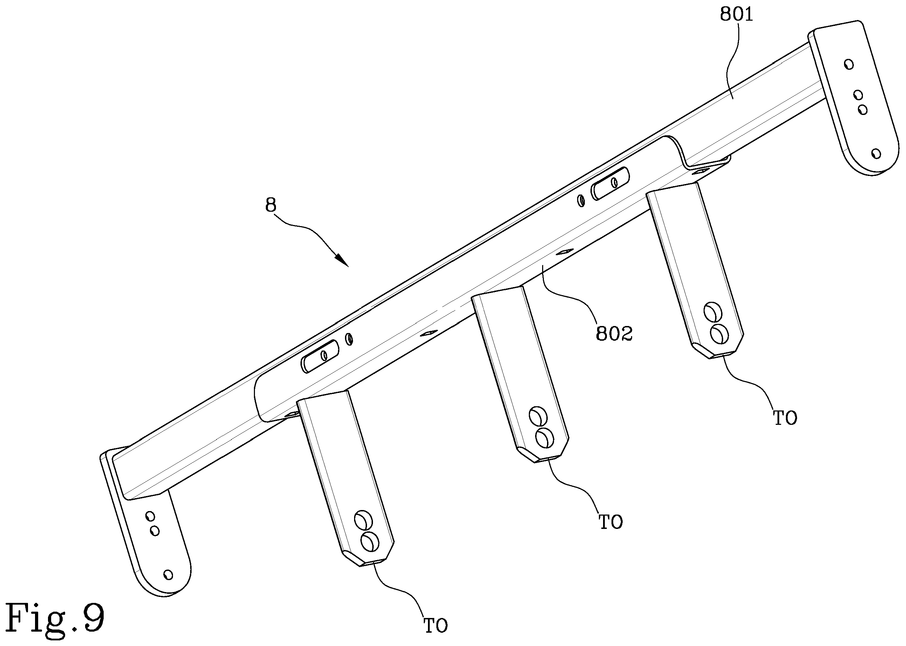

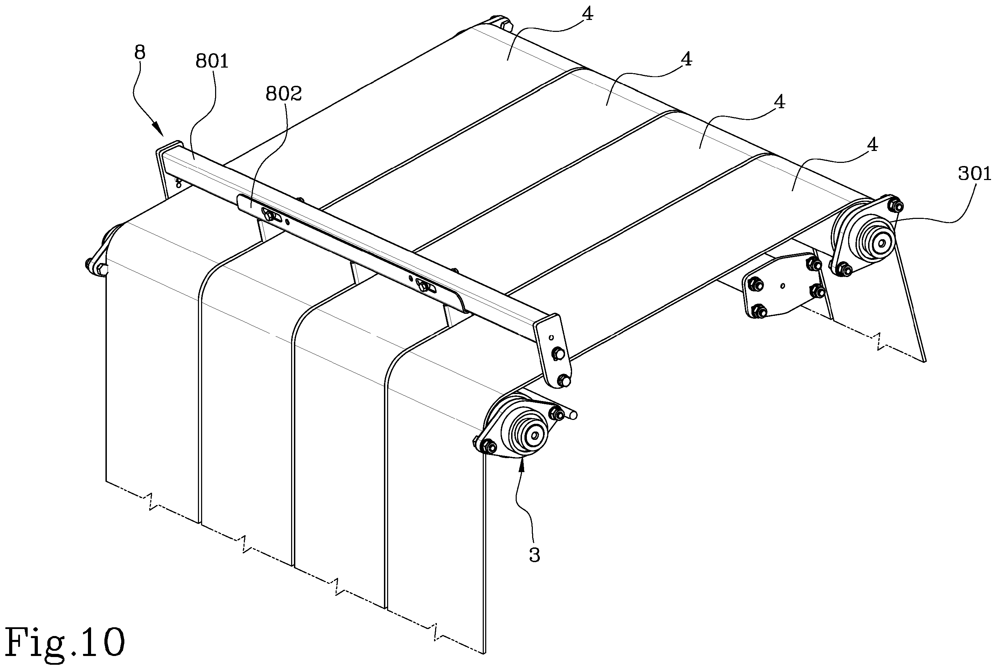

- figures 9 and 10 illustrate a belt divider of the baler,

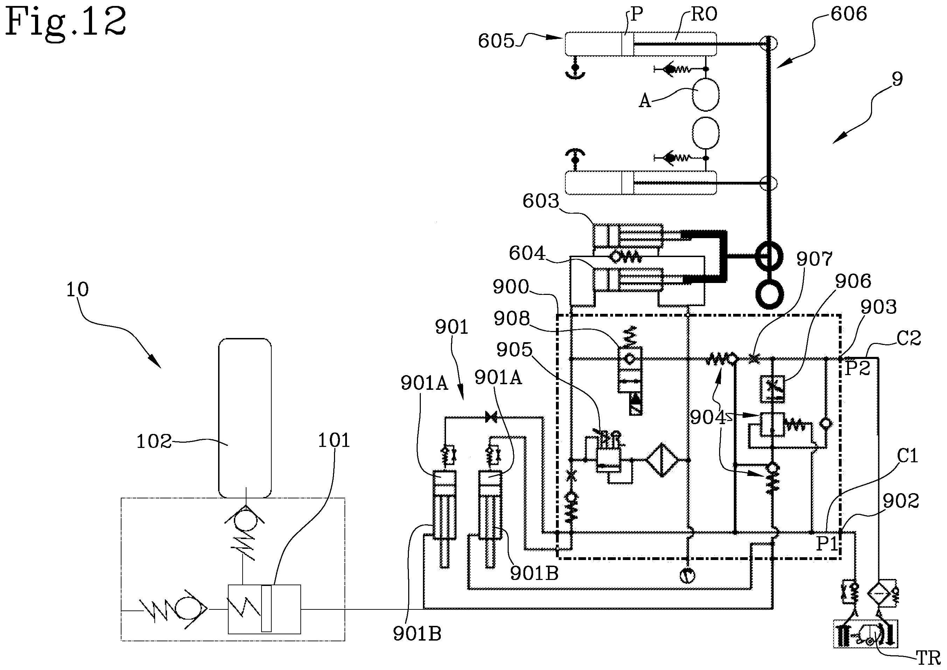

- figures 11 and 12 illustrate a schematic view of a hydraulic circuit between the baler and the tractor.

### Detailed description of preferred embodiments of the invention

With reference to the aforementioned figures the baler for forming round bales of hay is indicated by number 1. The baler 1 comprises a frame F. The frame F provides an internal volume. The baler 1 also includes a feeding unit 2. The feeding unit 2 is configured for picking up hay from the ground and for feeding it into the baler 1. The feeding unit has an inlet I. The feeding unit has an outlet O. The inlet faces the ground. The outlet O of the feeding unit is inside the baler 1. The outlet O faces the internal volume. The baler 1 includes a compression chamber C. The compression chamber C is configured for compressing the hay to form the bale. The compression chamber C is of a variable diameter. In the compression chamber C, the bale forming zone increases in size as the bale is formed within the chamber. The hay is fed to the compression chamber C from the outlet O of the feeding unit 2 in a feeding direction D. The baler 1 comprises a plurality of guide rollers 3. The plurality of guide rollers (rollers) is placed inside the internal volume. In an example, the rollers of the plurality of guide rollers 3 are toothed. In an example, at least one guide roller is displaceable in order to obtain a larger compression chamber C. The plurality of guide rollers 3 includes a pair of entrance rollers 3E. The baler 1 can comprise a feeding roller 7. The feeding roller 7 is placed between the outlet O of the feeding unit 2 and the entrance rollers 3E. The feeding roller 7 is configured to push the hay towards the compression chamber C in order to contribute to the feeding of the hay to the compression chamber. The baler 1 also includes a plurality of belts 4. The belts of the plurality of belts 4 are placed side by side in the internal volume. The belts of the plurality of belts 4 are wound around the guide rollers so to define an endless loop 5. The loop 5 is flexible for delimiting the compression chamber. Moreover, the guide rollers 3 are rotatable for driving the belts 4 around the loop. In particular each part of the plurality of belts 4 is stretched between two consecutive rollers 3. In an example each belt of the plurality of belts 4 lays in a plane which is oriented longitudinally so that the plurality of belts 4, when stretched between the plurality of rollers 3, are oriented along a longitudinal direction L. In an example, the width of each belt of the plurality of belts is at least 230 mm. preferably, the width of each belt of the plurality of belts is equal to 286 cm. In an example, the plurality of belts includes four belts. In an example, the compression chamber has a width equal to 1542 mm. The plurality of belts 4 can include five belts. In the compression chamber C the bale forms between at least two consecutive rollers 3 that are spaced far enough apart to let the belts 4 be stretched between the two rollers 3. Therefore, the plurality of belts 4 encircle the circumference of the bale which is formed inside the compression chamber.

In particular the belts 4 are deformed as the bale is being formed inside the compression chamber C. therefore, the belts 4 conform to the shape of the bale formed in the compression chamber. In an example, an entrance portion EP of the loop 5 between the entrance rollers 3E is transversal to the feeding direction D. The entrance portion of the loop 5 is located at the outlet O of the feeding unit 2 so that the hay contacts the entrance portion EP of the loop 5 upon entering the internal volume.

The baler 1 includes a tensioning system 6. The tensioning system 6 is configured for applying a tension to the belts 4 so to generate a corresponding pressure on the hay contained inside the compression chamber C. The tensioning system includes a first tensioning arm 601 and a second tensioning arm 602. The first and the second tensioning arms are articulated to the frame F. The tensioning arms are articulated to the frame F, to move between a bale starting position, where the formation of the bale is being started, and a full bale position, where a complete bale is formed inside the compression chamber C. The tensioning arms maintain constant tension on the belts and release the portion of the belt which is needed to grow the bale inside the compression chamber.

In particular, the tensioning system 6 is configured for adjusting the tension of the belts 4 to a tensioning set point. The tensioning set point is selected by the operator. In an example, the baler 1 comprises a control unit.

The control unit is connected to the tensioning system 6. The control unit is programmed for automatically setting the tensioning of the belts 4 to a start value. The control unit is programmed for automatically setting the tensioning of the belts 4 to the start value with the tensioning arms in the bale starting position. Moreover, the control unit is programmed for automatically increasing the tensioning of the belts to reach the tensioning set point responsive to a predetermined swivel angle of the tensioning arms around an articulation point as the arms move upwards during bale formation. The articulation point is the point where the tensioning arms 601, 602 are articulated to the frame F of the baler 1. In other words, when the bale core is being formed in the initial phase of bale formation, the control unit sets the tensioning on the belt to a starting value. The starting value is near zero. As the bale core is being formed inside the compression chamber C, the belts deform in order to conform to the shape of the bale core and the tensioning arms move upwards. When the swivel angle of the tensioning arms reaches a predetermined value, which is considered to be the end of the core formation phase, the control unit increases the tensioning of the belts 4 to the tensioning set point. In an example, the baler 1 includes an angular sensor to detect the swivel angle of the tensioning arms.

In an example, the control unit is configured to modify the tensioning of the belts in a range between a low value and high value. The control unit is configured for modifying the tensioning of the belts in response to setpoints which are selectable by the operator. Different value of belt tensioning can be selected for the bale core and the outer parts pf the bale. For example, the belt tensioning set point can be low, medium or high. Moreover, the control unit is programmed for automatically setting the tensioning of the belts 4 at a start value which is lower than the low value.

In an example, the control unit is configured to modify the tensioning of the belts through a proportional valve.

Each of the first tensioning arm 601 and the second tensioning arm 602 has a first end 601A,602A and a second end 601B,602B. Each of the first tensioning arm 601 and the second tensioning arm 602 is articulated to the frame F at the first end of the arm 601A,602A. Each of the tensioning arms is articulated to the frame in a way that the arm is distant from the plurality of guide rollers 3 with respect to an advancing direction AD of the baler 1.

Moreover, in an example, each of the tensioning arms 601,602 has a first arm roller AR1. The first arm roller AR1 is placed at the second end 601B, 602B of each of the tensioning arms 601,602. Each of the tensioning arms has a second arm roller AR2. The second arm roller AR2 is placed between the first end 601A, 602A and the second end 601B, 602B of each tensioning arm 601, 602. In particular each tensioning arm has a bottom half and a top half. The bottom half extends from a mid-point of each arm to the second end 601B, 602B of each tensioning arms. The top half of each tensioning arm extends from the mid-point to the first end 601A, 602A. In an example, the second arm roller AR2 is placed at the bottom half in vicinity of the first arm roller AR1. In an example, the first and the second arm rollers AR1, AR2 are configured to cooperate with the plurality of guide rollers 3 placed at an altitude higher with respect to that of the articulation point between the tensioning arms 601,602 and the frame F, where the belts of the plurality of belts 4 are rolled up. Moreover, the plurality of guide rollers 3 includes a first guide roller 301. The plurality of guide rollers 3 includes a second guide roller 302. The plurality of guide rollers 3 also includes a third roller 303. In an example, the first, the second and the third rollers are placed at a higher altitude with respect to the articulation point between the tensioning arms 601, 602 and the frame F. The first and the second arm roller are configured to cooperate with the first, the second and the third rollers 301, 302, 303 so that the belts of the plurality of belts 4 are stretched between
the first guide roller and the first arm roller;
the first arm roller and the second guide roller;
the second guide roller and the second arm roller,
the second arm roller and the third guide roller.

Moreover, the second and the third guide rollers 302, 303 are placed between the first end and the second end of the arm along the advancing direction.

The Entrance portion of the belt is stretched only between the guide rollers 3E and is not wound around the first and second arm rollers AR1, AR2.

The tensioning system 6 includes a first actuator 603 and a second actuator 604. The first and the second actuators are associated with the first and the second tensioning arm 601, 602 respectively. The first and the second tensioning arms have an upwards movement during bale formation and a downward movement after bale release. The first and the second actuators 603, 604 are configured to regulate the movement of the first and the second arm adjust the tension of the belts according to predetermined setpoints for each layer of the bale. In an example, the first and the second tensioning arms 601, 602 are coupled and are displaceable in their position in a synchronized way.

In an example, the tensioning system 6 includes a couple of fluid accumulators A. The fluid accumulators have a gas volume. Moreover, the fluid accumulators function responsive to the movement of the tensioning arms 601, 602 so that the gas expands when the tensioning arms are lowered and the actuator is shortened, and the gas is compressed when the actuator is elongated, and the arms are lifted.

In an example, the accumulator A is a membrane accumulator. In the accumulator, a membrane M is used as partition between the fluid side FS and the gas side GS of the accumulator. In particular, the membrane functions as an elastic member which compresses the gas when the accumulator is filled with fluid. The actuator 603, 604 is a hydraulic cylinder. The actuator is configured to apply resistance on the tensioning arms 601, 602 as they start having the upwards movement as a result of baler formation inside the compression chamber. The hydraulic cylinder has a cylinder tube. The cylinder tube has a piston connected to a rod. The piston divides the tube into two cylinder chambers, top chamber (rod side) and bottom chamber (piston side). At the bale starting position when the tensioning arms are lowered, the top chamber is filled with fluid. As the tensioning arms start moving upwards, the piston moves upwards and the fluid in the top chamber is slowly removed through the proportional valve. Therefore, the tensioning arms moves upwards due to the pressure exerted by the bale which is being formed inside the compression chamber. Through the proportional valve and the control unit, it is possible to increase the tensioning of the belts through the resistance applied to the upwards movement of the tensioning arms by the actuators 603, 604. It is to be mentioned that the tensioning of the belt determines the density of the bale. Moreover, different value of tensioning can be selected for each layer of the bale. For example, the bale core, intermediate layer and outer layer of the bale can have the same or different tensioning level.

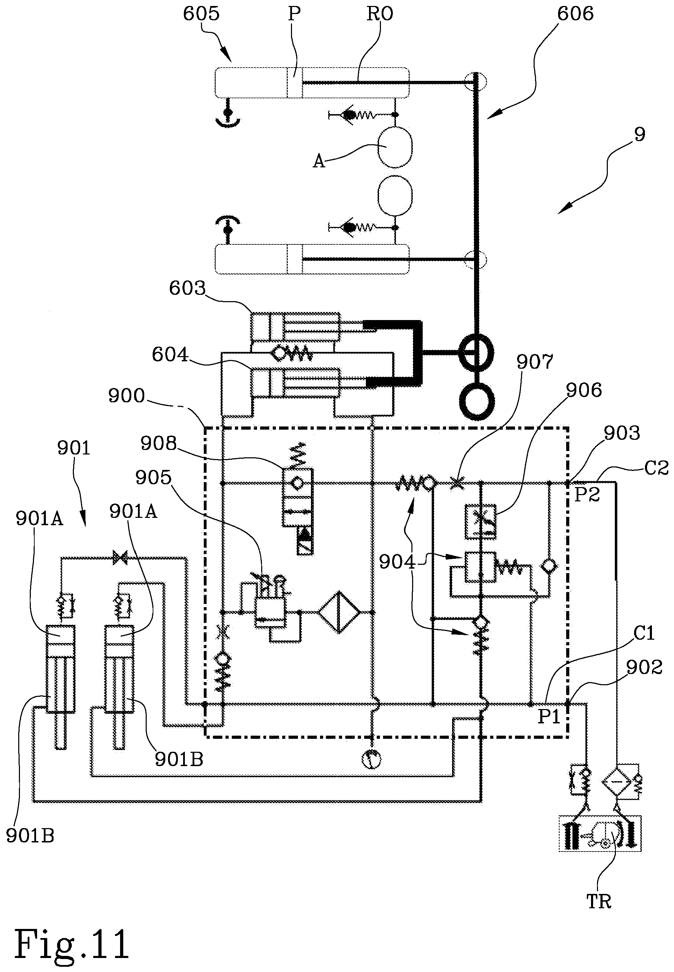

The baler also includes a tailgate. The tailgate is connected to a couple of piston-cylinder units 901 which allow the tailgate to open and close. Each of the piston-cylinder units of the tailgate includes a tube having a rod and a piston. The tube of the piston-cylinder units 901, similarly to the tube of the hydraulic cylinders 603, 604 of the tensioning system, includes a piston side 901A and a rod side 901B. The tube of the piston-cylinder units 901 is filled with a fluid. The tailgate is opened in order to release the bale which is formed inside the compression chamber. Moreover, there is a hydraulic circuit 9 between a tractor TR, to which the baler 1 can be connected, and the baler 1. The hydraulic cylinders (actuators) 603, 604 of the tensioning system 6 can be connected to the piston-cylinder units 901 of the tailgate through the hydraulic circuit 9 between the tractor and the baler. A schematic diagram of said hydraulic circuit can be seen in figure 11. Moreover, the hydraulic circuit 9 includes a hydraulic block 900 to regulate the fluid inside the hydraulic circuit 9. According to this schematic diagram, when the tailgate opens, the piston side 901A of the piston-cylinder units 901 of the tailgate and the piston side of the hydraulic cylinders 603, 604 of the tensioning system is filled with the fluid (oil) and therefore the rod is lifted and the oil which is inside the rod side 901B of the piston-cylinder units 901 is released. Consequently, pressure is applied to a first connection line C1 which connects the hydraulic power source of the tractor TR to a first infeed point 902 of the hydraulic block 900 and pressure increases on one side of the circuit 9. Therefore, in this case, the pressure P1 of the first connection line C1 is greater than the pressure P2 of a second connection line C2 which connects the hydraulic power source of the tractor to a second infeed point 903 of the hydraulic block 900. At the same time, when oil is transferred to the piston side of the piston-cylinder units 901 of the tailgate and the hydraulic cylinder 603, 604, a plurality of regulation valves 904 are activated to open the connection line which has a lower pressure (second connection line C2). In particular, the oil which is released from the rod side of the piston-cylinder units of the tailgate and the rod side of the hydraulic cylinders 603, 604 of the tensioning system flows through the connection line which has the lower pressure P2 (second connection line). The hydraulic circuit 9 includes a bypass valve 908. As explained earlier, the control unit is programmed to automatically set the tensioning of the belts to a start value when the tensioning arms are in the bale starting position. The start value of tensioning can be near zero. In particular, when the tensioning arms are at the bale starting position and the crops are entering the compression chamber to form the bale (preliminary baler core formation phase), the control unit commands to open the bypass valve 908. As a result, the rod side and the piston side of the hydraulic cylinders 603, 604 of the tensioning system 6 are connected through the open bypass valve 908 and the fluid can pass through the bypass valve from one side to the other side of the tube of the hydraulic cylinders 603, 604. In this case the fluid of the rod side and the fluid of the piston side of the cylinders 603, 604 are in equilibrium and no pressure is exerted on the tensioning arms. Therefore, the tensioning arms move upwards only due to the force exerted by the crops which contact the entrance portion of the belts 4 and enter the compression chamber. When the preliminary bale core reaches a predetermined diameter, the preliminary bale core formation phase is assumed to be over. As the preliminary baler core formation phase ends, the control unit commands to close the bypass valve 908 and to open a proportional valve 905. Therefore, the fluid of the rod side of the hydraulic cylinder 603, 604 passes through the proportional valve 905.

As mentioned earlier, the oil release from the rod side of the hydraulic cylinder is regulated through the proportional valve 905. Therefore, as the tensioning arms 601, 602 move upwards due to bale formation, the oil (fluid) is released from the rod side of the tube of the hydraulic cylinders 603,604 in response to a predetermined amount of resistance which needs to be inserted on the upwards movement of the tensioning arms in order to apply the required tensioning on the belts 4 and provide the desirable tension on the bale core and on different layers of the bale. When the predetermined amount of resistance is obtained, the proportional valve 905 is closed so that no more fluid can be released from the rod side of the hydraulic cylinder 603, 604. Therefore, due to the upwards movement of the tensioning arm, the rod is lifted, and the pressure increases in the rod side of the hydraulic cylinder. The proportional valve is then opened again to regulate the oil release form the rod side and consequently the tensioning level of the arms.

Therefore, the start value of the tensioning of the belts is provided by the bypass valve 908, moreover, the value of the tensioning of the belts which determines the density of each layer of the bale is provided by the proportional vale 905 in response to a setpoint chosen by the operator.

When the tailgate closes, oil is transferred to the rod side of the piston-cylinder units of the tailgate and the rod side of the hydraulic cylinders (actuators) of the tensioning system. Therefore, pressure is applied on the second connection line C2 and consequently pressure P2 of the second connection line is greater than the pressure P1 of the first connection line. At the same time, oil is taken from the piston side. The oil which is transferred to the rod side of the piston-cylinder units 901 can be regulated through an adjustable choke valve 906. Moreover, the oil which is transferred to the rod side of the hydraulic cylinders 603, 604 can be regulated through a fixed choke valve 907. It is to be mentioned that when the rod side of the hydraulic cylinder is being filled by the oil, the proportional valve 905 and the bypass valve are deactivated.

In an example, the accumulator A is connected to a passive piston-cylinder assembly 605 to form an elastic unit 606.

Alternatively, the accumulator is integrated into a passive piston-cylinder assembly to form an elastic unit 606.

In particular, the elastic unit is configured to take back the tensioning arms 601, 602 to the bale starting position after the bale release. Therefore, if no external force (for example force exerted to the tensioning arms as the bale forms inside the compression chamber) is present, the elastic unit keeps the tensioning arm in the lowered position (bale starting position). In an example, the elastic unit has a closed hydraulic circuit where a specific amount of fluid under pressure moves between the passive piston-cylinder assembly 605 and the accumulator A. Therefore, the fluid under pressure which moves between the passive piston-cylinder assembly 605 and the accumulator does not enter the hydraulic circuit 9. The passive piston-cylinder assembly 605, has a tube and a piston P which is attached to a rod RO and separates two chambers of the tube. One of the chambers of the tube of the passive piston-cylinder assembly 605 is connected to the accumulator A to form the closed hydraulic circuit. The other chamber is filled with air. The accumulator will take the fluid as the tensioning arms moves upwards due to bale formation, therefore, the pressure P3 increases, and the gas will be compressed. After the bale release the gas will then expand to force the pressurized fluid to the chamber of the passive piston-cylinder assembly 605; consequently, the piston moves downwards and as a result the tensioning arms move downwards toward the bale starting position. When the fluid is forced into the chamber of the passive piston-cylinder assembly 605 and the piston P moves downwards, the air which is inside the second chamber of the passive piston-cylinder assembly 605, is purged outside. It is also possible to change the fluid of the hydraulic circuit of the elastic unit through a purge point.

The baler comprises a belt divider 8. The belt divider 8 is configured to divide each belt of the plurality of belts 4 from the adjacent one. The belt divider 8 has divisions which correspond in number to the number of the plurality of belts 4. In an example, at least a part of the belt divider 8 is movable in a direction parallel and transversal to the longitudinal direction L. The baler 1 can have a plurality of belt dividers 8. In an example, the belt divider 8 comprises a fixed portion 801 and a movable portion 802. In an example, the fixed portion 801 is a bar. The bar is fixed to the frame F. The bar is extended along the transversal direction T between a first end and a second end. The movable part 802 is a comb. The movable part 802 is movably connected to the bar at a central part thereof. The belt divider 8 has a plurality of teeth TO. The plurality of teeth includes a pair of lateral teeth and a plurality of central teeth. The lateral teeth are fixed to the first and the second end of the bar and delimit external belts of the plurality of belts 4. The central teeth are placed between the lateral teeth and belong to the movable part. In an example, if n=number of belts, the belt divider has N teeth TO where N=n+1. Moreover, the movable portion 802 of the belt divider 8 includes N-2 teeth.

The movable part of the belt divider 8 is configured to slide with respect to the fixed bar. In an example, the at least one part of the belt divider 8 is configured to have a free motion. In particular, the at least one part of the belt divider 8 is configured to have a free motion as a result of displacement of the belts of the plurality of belts 4 and without further driving force. Therefore, when a belt of the plurality of belts 4 displaces, the belt contacts the teeth which separate the belt from other belts, and consequently the belt divider 8 moves with respect to the fixed bar.

In an example, the belt divider 8 has stopping elements. The stopping elements are configured to provide the movable portion of the belt divider 802with a limited movement. Mainly, the movable portion of the belt divider moves along a specific path which has a determined length. When the movable portion arrives at the end of said path, the stopping elements stop the movement of the movable portion, so that the movable portion is provided with a limited movement.

The Baler 1 also comprises chains. The chains run over the guide rollers 3. In an example, the internal side of the chain next to the rollers 3 is lubricated with lubrication liquid so that the lubrication liquid is distributed over the entire chain due to the centrifugal force. In particular, the internal side of the chain next to the rollers 3 and upstream of the roller with respect to the rotation of the chain relative to the roller is lubricated with the lubrication liquid. The lubrication liquid is distributed from a reservoir 102 of a lubrication system 10 through an actuator 101. In an example, the actuator of the lubrication system employs the pressurized oil which circulates in the hydraulic circuit 9 in order to pump the lubrication liquid. In particular, as mentioned earlier, when the tailgate opens, oil (pressurized fluid) is released from the rod side of the piston-cylinder units 901 of the tailgate and as a result, the pressure P2 increases on one side of the hydraulic circuit 9. In an example, the lubrication system 10 can be connected to the hydraulic circuit 9, so that the actuator employs the pressurized fluid (oil) of the hydraulic circuit to pump the lubrication liquid to the chains.

The baler includes a scraper roller SR. The scraper roller is placed next to the guide rollers 3. The scraper roller has augers at lateral parts. The scraper roller is configured for cleaning the guide rollers from the hay. In particular, the augers are twisted around the scraper roller at its lateral parts so that when the scraper roller rotates along with the guide rollers the augers clean the rollers and walls of the compression chamber from deposits of hay.

In an example, the scraper roller has a scraper wing SW. The scraper wing is attached to the scraper roller between the augers. The scraper wing projects from the surface of the roller. The scraper wing is configured for cleaning the guide rollers from the hay.

In an example, the scraper wing SW consists of lateral parts and a central part. The lateral parts can be extensions of the augers at the lateral parts of the scraper roller. The central part of the scraper wing is placed on the scraper roller between the lateral parts of the scraper wing. The central part of the scraper wing projects from the surface of the roller in a direction different from projecting direction of the lateral parts of the scraper wing. The central part and the lateral parts of scraper wing SW are detached from each other. In an example, the lateral parts and the central part of the scraper wing form a 180° angle.

The feeding unit 2 includes a pick-up unit 8. The pick-up unit is configured to rotate in a direction opposite to the direction of travel of the baler (advancing direction AD) for sweeping the hay upwardly. The pick-up unit has a plurality of tines on which project from the pick-up unit for sweeping the hay.

The feeding unit comprises a windguard assembly 202. The windguard assembly 202 is placed above the pick-up unit 201 for ensuring proper feeding of the hay into the baler 1.

The windguard assembly 202 also comprises a frame 2021. The windguard assembly 202 includes a pair of windguard arms 2022A, 2022B. The windguard arms 2022A, 2022B can be pivotably fixed to the frame 2021 of the windguard assembly. The windguard assembly 202 includes a windguard pipe 2023. The windguard pipe (pipe) 2023 is fixed between the windguard arms 2022A, 2022B. The windguard pipe 2023 extends along a longitudinal axis between a first end 2023A and a second end 2023B. The windguard assembly 202 includes a plurality of rake tines 2024. The rake tines (tines) 2024 are fixed to the pipe 2023. In an example, the rake tines 2024 are spaced from each other. The rake tines project towards the baler 1. The rake tines 2024 are distributed on the windguard pipe 2023 between the first and the second end 2023A, 2023B thereof. Each tine of the plurality of rake tines can have a free tip and an end fixed to the pipe 2023. In an example, the free tip of each rake tine is curved towards the pick-up unit 201.

The plurality of rake tine includes a first rake tine 2024A and a second rake tine 2024B. The first rake tine 2024 has a first inclination with respect to the ground and the second rake tine has a second inclination with respect to the ground. In an example, the second inclination is greater than the first inclination so that the tip of the second rake tine 2024B is located at a higher altitude from the ground with respect to the tip of the first rake tine 2024A.

The plurality of tines 2024 includes lateral tines. The lateral tines are placed at the first end 2023A and the second end 2023B of the windguard pipe 2023. The plurality of tines 2024 includes internal tines. The internal tines are positioned in a central portion of the pipe 2023. In an example, the lateral tines have the first inclination, and the central tines have the second inclination.

The plurality of rake tines 2024 an include intermediate tines. The intermediate tines are placed between the lateral tines and the central tines. The intermediate tines have a third inclination. In an example, the third inclination is greater than the first inclination and smaller than the second inclination. The windguard assembly can include a rotating windguard cylinder 2025. The rotating windguard cylinder 2025 is fixed between the windguard arms 2022A, 2022B.

In particular, each of the windguard arms 2022A, 2022B has a first end and a second end, wherein the first end is fixed to the frame 2021 and the second end is coupled to the windguard cylinder 2025. Moreover, each windguard arm consists of one single piece which extends, continuously, between the first end and the second end.

The rotating windguard cylinder 2025 is placed below the windguard pipe 2023.

The feeding unit 2 includes a rotor 203. The rotor 203 has a plurality of feeding blades 2031. Each of the feeding blades 2031 can have a plurality of fins 2032. The rotor 203 has a shaft which by receiving an external power rotate the rotor.

The rotor 203 is placed downstream of the pick-up unit 201. The rotor is placed in a way that the rotor and the pick-up unit are aligned. The rotor 203 is configured to receive the hay picked-up from the ground and to transfer the hay to the compression chamber C through the feeding blades 2031.

In an example, both the rotor 203 and the pick-up unit 201 rotate in a direction which is opposite to the rotation direction of wheels W of the baler when the baler advances along said direction of travel (advancing direction). Moreover, the feeding roller 7 rotate in the same direction as the rotor 203 and the pick-up unit 201.

The plurality of rake tines 2024 of the feeding unit 2 are configured to cooperate with the pick-up unit 201, the rotor 203, and the entrance portion of the loop to form a pre-chamber prior to the compression chamber C, where the hay is prepared to be transferred to the compression chamber to form the bale.

The rotor 203 can include a plurality of knives 2033. The knives can be inserted between the feeding blades 2031. In an example, the knives 2033 are removable. The number of knives on the rotor can be modified by the operator. In an example the maximum number of knives on the rotor equals 15. In another example, the rotor 203 can have up to 25 knives between the feeding blades.

A method for forming round bales comprises a step of providing a baler 1 with a plurality of guide rollers 3. The guide rollers (rollers) 3 are placed inside an internal volume of the baler 1. The plurality of guide rollers 2 can includes a pair of entrance rollers 3E.

The method includes a step of placing a plurality of belts (belts) 4 side by side in the internal volume. The belts are wound around the guide rollers 3 so as to define an endless loop. The loop is flexible for delimiting a compression chamber C. In an example, the method includes a step of displacing at least one guide roller of the plurality of the guide rollers 3 at top part of the internal volume, in order to obtain a larger compression chamber C. The method includes a step of rotating the guide rollers 3 for driving the plurality of belts 4 around the loop. The method comprises a step of feeding the hay into the compression chamber C of the baler 1 through a feeding unit 2. The hay is fed to the compression chamber C in a feeding direction D. In an example, the hay is fed to the compression chamber in a way that the hay contacts an entrance portion EP of the loop upon entering the internal volume. The entrance portion EP is transversal to the feeding direction D and stretched between the entrance rollers 3E. The method can include a step of pushing the hay towards the compression chamber C through a feeding roller 7 in order to enhance the movement of the hay from the feeding unit 2 to the compression chamber C in the feeding direction D.

The method includes a step of applying a tension to the belts 4 so to generate a corresponding pressure on the hay contained inside the compression chamber C. the method includes a step of adjusting the tension of the belts to a tensioning set point. The tensioning set point is selected by the operator. In an example, the tensioning of the belts is regulated through a proportional valve. The method includes a step of compressing the hay to form the bale in the compression chamber C. The method comprises a step of moving a pair of tensioning arms 601,602 between a bale starting position, where the formation of the bale is being started, and a full bale position, where a complete bale is formed inside the compression chamber C. The tensioning of the belts is provided by a tensioning system 6. The tensioning system includes the tensioning arms 601, 602. The method includes a step of articulating each of the tensioning arms 601, 602 at a first end 601A, 602A to a frame F of the baler 1 in a way that the arm is distant from the plurality of guide rollers with respect to an advancing direction AD of the baler 1.

In an example, the method includes a step of automatically setting the tensioning of the belts to a start value. The tensioning of the belts 4 is set to the starting value when the tensioning arms are in the bale starting position. Moreover, the method includes a step of automatically increasing the tensioning of the belts to reach the tensioning set point. In an example, the tensioning of the belts is increased to reach the tensioning set point responsive to a predetermined swivel angle of the tensioning arms 601,602 around an articulation point as the arms move upwards during bale formation. The articulation point is the point where the tensioning arms are articulated to the frame of the baler. In an example, the method includes a step of modifying the tensioning of the belts in a range between a low value and high value and in response to setpoints which are selected by the operator. The tensioning of the belts can be modified through a control unit. The method includes a step of automatically setting the tensioning of the belts at the start value which is lower than the low value.

The method includes a step of moving the tensioning arms in an upward direction during bale formation and in a downward direction after bale release. Each of the tensioning arms 601, 602 is associated with a respective actuator 603, 604. The method can have a step of moving the arms 601, 602 in a synchronized way. The method includes a step of regulating the movement of the tensioning arms through respective actuators 603, 604 to adjust the tension of the belts according to predetermined setpoints for each layer of the bale. In an example, the method includes a step of regulating the movement of the actuators through a couple of fluid accumulators A. the accumulators have a gas volume, so that the gas expands when the tensioning arms 601, 602 are lowered and the actuator is shortened, and the gas is compressed when the actuator is elongated, and the arms are lifted. In an example, the method includes a step of connecting the accumulator to a passive piston-cylinder assembly 605 to form an elastic unit 606.

Alternatively, the method comprises a step of integrating the accumulator into a passive piston-cylinder assembly 605 to form an elastic unit.

In an example, the method includes a step of providing the tensioning arms 601, 602 with a first arm roller AR1. The first arm roller AR1 is placed at a second end 601B, 602B of the tensioning arms. The method includes a step of providing the tensioning arms 601, 602 with a second arm roller AR2. The second tensioning arm AR2 is placed between the first end 601A, 602A and the second end 601B, 602B of the arms 601, 602.

The method can include a step of placing the belts of the plurality of belts 4 around the internal volume in a way that the first and the second arm rollers AR1, Ar2 cooperate with the plurality of guide rollers 3 placed at an altitude higher with respect to that of the articulation point between the arm 601, 602 and the frame F, where the belts are rolled up.

The method includes a step of placing each belt of the plurality of belts in a plane which is oriented longitudinally so that the plurality of belts, when stretched between the plurality of rollers, are oriented along a longitudinal direction L.

Moreover, the method includes a step of dividing each belt of the plurality of belts 4 from the adjacent one through a belt divider 8. The belt divider has divisions which correspond in number to the number of the plurality of belts. At least a part of the belt divider is movable in a direction parallel and transversal to the longitudinal direction L.

In an example, the method includes a step of running chains over the guide rollers 3. The method includes a step of applying lubrication liquid to the internal side of the chains, next to the guide rollers so that the lubrication liquid is distributed over the entire chain due to the centrifugal force.

In an example, the method includes a step of lubricating the internal side of the chain next to the rollers and upstream of the roller with respect to the rotation of the chain relative to the roller with the lubrication liquid.

The method can include a step of cleaning the guide rollers from the hay through a scraper roller SR. The scraper roller is placed next to the guide rollers 3, the scarper roller is provided with augers at lateral parts. The scraper roller has a scarper wing SW. The scraper wing is attached to the roller between the augers and projects from the surface of the roller for cleaning the guide rollers from the hay.

A method for feeding hay picked-up from the ground to a baler includes a step of rotating a pick-up unit 201 of a feeding unit 2 in a direction opposite to the direction of travel of the baler AD for sweeping the hay upwardly. the method includes a step of placing a windguard assembly 202 above the pick-up unit 201 for ensuring proper feeding of the hay into the baler.

The method includes a step of pivotably fixing a pair of windguard arms 2022A, 2022B to a frame 2021 of the windguard assembly 202.

The method includes a step of fixing a windguard pipe 2023 between the windguard arms 2022A, 2022B. The windguard pipe 2023 extends along a longitudinal axis L between a first end 2023A and a second end 2023B.

The method includes a step of fixing a plurality of rake tines 2024 to the pipe 2023 in a way that the tines are spaced from each other. The plurality of rake tines 2024 project towards the baler.

The method includes a step of distributing the tines on the pipe between the first and the second end thereof such that a first rake tine 2024A of the plurality of rake tine has a first inclination with respect to the ground and a second rake tine 2024B of the plurality of rake tines has a second inclination with respect to the ground, and the second inclination is greater than the first inclination so that the tip of the second tine is located at a higher altitude from the ground with respect to the tip of the first tines.

The method includes a step of placing lateral tines on the pipe at the first end 2023A and the second end 2023B thereof. The method also includes a step of placing internal tines at a central portion of the pipe. The lateral tines have the first inclination, and the central tines have the second inclination.

In an example, the method includes a step of placing intermediate tines between the lateral tines and the central tines. The intermediate tines can have a third inclination which greater than the first inclination and smaller than the second inclination.

The method can include a step of a step of fixing a rotating windguard cylinder 2025 between the windguard arms 2022A, 2022B and below the windguard pipe 2023.

In an example, the method includes a step of placing a rotor 203 downstream of the pick-up unit 201, the rotor can have a plurality of feeding blades 2031. Each of the blades can have fin. The roto 203 is placed in a way that the rotor and the pick-up unit are aligned.

The method can have a step of rotating both the rotor and the pick-up unit in a direction which is opposite to the rotation direction of wheels of the baler when the baler advances along said direction of travel AD.

## Claims

1. A baler (1) for forming round bales of crops, including
- a frame providing an internal volume;
- a pick up unit (2) attached to the frame and configured for picking up crops from the ground and for feeding it into the baler (1), the feeding unit having an inlet facing the ground and an outlet facing the internal volume;
- a compression chamber (C) for compressing the crops to form the bale, the compression chamber being of a variable diameter, wherein the crops is fed to the compression chamber from the outlet of the feeding unit in a feeding direction (D);
- a plurality of guide rollers (3) placed inside the internal volume and including a pair of entrance rollers (3E);
- a plurality of belts (4) placed side by side in the internal volume and wound around the guide rollers so to define an endless loop (5), the loop being flexible for delimiting the compression chamber, wherein the guide rollers are rotatable for driving the belts around the loop,
wherein the baler further comprises a belt divider (8) to divide each belt of the plurality of belts from the adjacent one, the belt divider having divisions corresponding in number to the number of the plurality of belts, wherein each belt of the plurality of belts lays in a plane which is oriented longitudinally so that the plurality of belts, when stretched between the plurality of rollers, are oriented along a longitudinal direction (L), **characterized in that** at least a part of the belt divider is movable in a direction parallel and transversal to the longitudinal direction.

2. The baler (1) according to claim 1 wherein the belt divider (8) comprises a fixed portion (801) and a movable portion (802), wherein the fixed portion is a bar fixed to the frame and extended along the transversal direction between a first end and a second end and the movable part is a comb movably connected to the bar at a central part thereof.

3. The baler (1) according to claim 2, wherein the movable part (802) of the belt divider is configured to slide with respect to the fixed bar.

4. The baler (1) according to claim 2 or 3, wherein the belt divider (8) has stopping elements and wherein the movable portion (802) of the belt divider is configured to move along a specific path having a determined length, the stopping elements being configured to stop the movable portion of the belt divider when the movable portion arrives at the end of said path, so that the movable portion is provided with a limited movement.

5. The baler (1) according to any of the previous claims from 2 to 4, wherein if n=number of belts (4), the belt divider (8) has N teeth wherein N=n+1 and wherein the movable portion of the belt divider includes N-2 teeth.

6. The baler (1) according to any of the previous claims, wherein the at least one part of the belt divider (8) is configured to have a free motion as a result of displacement of the belts of the plurality of belts (4) and without further driving force.

7. The baler (1) according to any of the previous claims, comprising chains running over the guide rollers (3), wherein the internal side of the chain next to the rollers is lubricated with lubrication liquid so that the lubrication liquid is distributed over the entire chain due to the centrifugal force, wherein the internal side of the chain next to the rollers and upstream of the roller with respect to the rotation of the chain relative to the roller is lubricated with the lubrication liquid

8. The baler (1) according to any of the previous claims, further comprising a scraper roller (SR) placed next to the guide rollers (3), the roller having augers at lateral parts and being configured for cleaning the guide rollers from the crops.

9. The baler (1) according to claim 9, wherein the roller has a scarper wing (SW) attached to the roller between the augers and projecting from the surface of the roller for cleaning the guide rollers from the crops.

10. The baler (1), according to claim 9, wherein the scraper wing consists of lateral parts and a central part, the lateral parts being extensions of the augers and wherein the central part is placed on the scraper roller between the lateral parts and projects from the surface of the roller in a direction different from projecting direction of the lateral parts of the scraper wing.

11. The baler (1) according to claim 10, wherein the lateral parts and the central part of the scraper wing form a 180º angle.

12. The baler (1) according to any of the previous claims, wherein the plurality of belts (4) includes four belts.

13. A method for forming round bales, comprising the following steps:
- providing a baler (1) with a plurality of guide rollers (3) placed inside an internal volume of the baler and including a pair of entrance rollers (3E);
- placing a plurality of belts (4) side by side in the internal volume and wind them around the guide rollers so to define an endless loop (5), the loop being flexible for delimiting a compression chamber (C);
- rotating the guide rollers (3) for driving the belts around the loop;
- feeding the crops into the compression chamber (C) of the baler (1) through a pick up unit (2) in a feeding direction (D),
- compressing the crops to form the bale in the compression chamber (C);
- dividing each belt of the plurality of belts from the adjacent one through a belt divider (8), the belt divider having divisions corresponding in number to the number of the plurality of belts;
- placing each belt of the plurality of belts in a plane which is oriented longitudinally so that the plurality of belts, when stretched between the plurality of rollers, are oriented along a longitudinal direction,
**characterized in that** at least a part of the belt divider is movable in a direction parallel and transversal to the longitudinal direction.

14. The method according to claim 13, comprising the steps of
- running chains over the guide rollers (3),
- applying lubrication liquid to the internal side of the chains, next to the guide rollers so that the lubrication liquid is distributed over the entire chain due to the centrifugal force,- lubricating the internal side of the chain next to the rollers and upstream of the roller with respect to the rotation of the chain relative to the roller with the lubrication liquid.

15. The method according to any of the previous claims from **13** to **14**, comprising a step of cleaning the guide rollers from the crops through a scraper roller (SR) which is placed next to the guide rollers and is provided with augers at lateral parts, wherein the scraper roller has a scarper wing (SW) attached to the roller between the augers and projecting from the surface of the roller for cleaning the guide rollers from the crops.

## Patentansprüche

1. Ballenpresse (1) zum Formen von Rundballen aus Erntegut, einschließend:
- einen Rahmen, der ein Innenvolumen bereitstellt;
- eine Aufnahmeeinheit (2), die am Rahmen befestigt und zum Aufnehmen von Erntegut vom Boden und zum dessen Zuführen in die Ballenpresse (1) ausgelegt ist, wobei die Zuführeinheit einen zum Boden gerichteten Eintritt und einen in das Innenvolumen gerichteten Austritt aufweist;
- eine Verdichtungskammer (C) zum Verdichten des Ernteguts zur Bildung des Ballens, wobei die Verdichtungskammer einen variablen Durchmesser aufweist, wobei das Erntegut vom Austritt der Zuführeinheit in einer Zuführrichtung (D) der Verdichtungskammer zugeführt wird;
- eine Vielzahl von Führungswalzen (3), die im Innenvolumen platziert sind und ein Paar Eingangswalzen (3E) einschließen;
- eine Vielzahl von Gurten (4), die im Innenvolumen nebeneinander platziert und um die Führungswalzen gewickelt sind, sodass sie eine Endlosschleife (5) definieren, wobei die Schleife flexibel ist, um die Verdichtungskammer zu begrenzen, wobei die Führungswalzen drehbar sind, um die Gurte um die Schleife zu führen,
wobei die Ballenpresse ferner einen Gurttrenner (8) umfasst, um jeden Gurt der Vielzahl von Gurten vom angrenzenden Gurt zu trennen, wobei der Gurttrenner eine Anzahl von Unterteilungen aufweist, die der Anzahl der Vielzahl von Gurten entspricht, wobei jeder Gurt der Vielzahl von Gurten in einer Ebene liegt, die in Längsrichtung so ausgerichtet ist, dass die Vielzahl von Gurten, wenn sie zwischen der Vielzahl von Walzen gespannt sind, entlang einer Längsrichtung (L) ausgerichtet ist, **dadurch gekennzeichnet, dass** zumindest ein Teil des Gurttrenners in einer Richtung parallel und quer zur Längsrichtung bewegbar ist.

2. Ballenpresse (1) nach Anspruch 1, wobei der Gurttrenner (8) einen festen Abschnitt (801) und einen bewegbaren Abschnitt (802) umfasst, wobei der feste Abschnitt eine am Rahmen befestigte Stange ist, die sich in Querrichtung zwischen einem ersten Ende und einem zweiten Ende erstreckt, und der bewegbare Abschnitt ein Kamm ist, der an einem mittleren Teil der Stange bewegbar mit dieser verbunden ist.

3. Ballenpresse (1) nach Anspruch 2, wobei der bewegbare Teil (802) des Gurttrenners so ausgelegt ist, dass er in Bezug auf die feste Stange gleitet.

4. Ballenpresse (1) nach Anspruch 2 oder 3, wobei der Gurttrenner (8) Stoppelemente aufweist und wobei der bewegbare Abschnitt (802) des Gurttrenners so ausgelegt ist, dass er sich entlang einer spezifischen Strecke mit einer bestimmten Länge bewegt, wobei die Stoppelemente so ausgelegt sind, dass sie den bewegbaren Abschnitt des Gurttrenners anhalten, wenn der bewegbare Abschnitt das Ende der genannten Strecke erreicht, sodass der bewegbare Abschnitt eine begrenzte Bewegung aufweist.

5. Ballenpresse (1) nach einem der vorhergehenden Ansprüche 2 bis 4, wobei, wenn n die Anzahl der Gurte (4) ist, der Gurttrenner (8) N Zähne aufweist, wobei N = n + 1 ist, und wobei der bewegbare Teil des Gurttrenners N-2 Zähne einschließt.

6. Ballenpresse (1) nach einem der vorhergehenden Ansprüche, wobei der mindestens eine Teil des Gurttrenners (8) so ausgelegt ist, dass er sich infolge der Verschiebung der Gurte der Vielzahl von Gurten (4) und ohne weitere Antriebskraft frei bewegen kann.

7. Ballenpresse (1) nach einem der vorhergehenden Ansprüche, umfassend Ketten, die über die Führungswalzen (3) laufen, wobei die Innenseite der Kette neben den Walzen mit Schmierflüssigkeit geschmiert wird, so dass sich die Schmierflüssigkeit aufgrund der Zentrifugalkraft über die gesamte Kette verteilt, wobei die Innenseite der Kette neben den Walzen und stromaufwärts der Walze in Bezug auf die Drehung der Kette relativ zur Walze mit der Schmierflüssigkeit geschmiert wird.

8. Ballenpresse (1) nach einem der vorhergehenden Ansprüche, ferner umfassend eine neben den Führungswalzen (3) platzierte Schaberwalze (SR), wobei die Walze an ihren seitlichen Teilen Förderschnecken aufweist und dazu ausgelegt ist, die Führungswalzen von Erntegut zu reinigen.

9. Ballenpresse (1) nach Anspruch 9, wobei die Walze einen Schaberflügel (SW) aufweist, der an der Walze zwischen den Förderschnecken angebracht ist und aus der Oberfläche der Walze herausragt, um die Führungswalzen von Erntegut zu reinigen.

10. Ballenpresse (1) nach Anspruch 9, wobei der Schaberflügel aus seitlichen Teilen und einem mittleren Teil besteht, wobei die seitlichen Teile Verlängerungen der Förderschnecken sind und wobei der mittlere Teil auf der Schaberwalze zwischen den seitlichen Teilen platziert ist und aus der Oberfläche der Walze in einer Richtung herausragt, die von der Auskragungsrichtung der seitlichen Teile des Schaberflügels abweicht.

11. Ballenpresse (1) nach Anspruch 10, wobei die seitlichen Teile und der mittlere Teil des Schaberflügels einen Winkel von 180° bilden.

12. Ballenpresse (1) nach einem der vorhergehenden Ansprüche, wobei die Vielzahl von Gurten (4) vier Gurte einschließt.

13. Verfahren zum Formen von Rundballen, umfassend die folgenden Schritte:
- Bereitstellen einer Ballenpresse (1) mit einer Vielzahl von Führungswalzen (3), die in einem Innenvolumen der Ballenpresse platziert sind und ein Paar Eingangswalzen (3E) einschließen;
- Platzieren einer Vielzahl von Gurten (4) nebeneinander im Innenvolumen und Wickeln dieser um die Führungswalzen, sodass sie eine Endlosschleife (5) definieren, wobei die Schleife flexibel ist, um eine Verdichtungskammer (C) zu begrenzen;
- Drehen der Führungswalzen (3), um die Gurte um die Schleife zu führen;
- Zuführen des Ernteguts in die Verdichtungskammer (C) der Ballenpresse (1) über eine Aufnahmeeinheit (2) in einer Zuführrichtung (D);
- Verdichten des Ernteguts zum Formen des Ballens in der Verdichtungskammer (C);
- Trennen jedes Gurtes der Vielzahl von Gurten vom angrenzenden Gurt mittels eines Gurttrenners (8), wobei der Gurttrenner eine Anzahl von Unterteilungen aufweist, die der Anzahl der Vielzahl von Gurten entspricht;
- Platzieren jedes Gurtes der Vielzahl von Gurten in einer Ebene, die in Längsrichtung so ausgerichtet ist, dass die Vielzahl von Gurten, wenn sie zwischen der Vielzahl von Walzen gespannt sind, entlang einer Längsrichtung ausgerichtet ist,
**dadurch gekennzeichnet, dass** zumindest ein Teil des Gurttrenners in einer Richtung parallel und quer zur Längsrichtung bewegbar ist.

14. Verfahren nach Anspruch 13, umfassend die folgenden Schritte:
- Führen der Ketten über die Führungswalzen (3),
- Aufbringen von Schmierflüssigkeit auf die Innenseite der Ketten neben den Führungswalzen, sodass die Schmierflüssigkeit aufgrund der Zentrifugalkraft über die gesamte Kette verteilt wird,
- Schmieren der Innenseite der Kette neben den Walzen und stromaufwärts der Walze in Bezug auf die Drehung der Kette relativ zur Walze mit der Schmierflüssigkeit.

15. Verfahren nach einem der vorhergehenden Ansprüche 13 bis 14, umfassend einen Schritt zum Reinigen der Führungswalzen von Erntegut mittels einer Schaberwalze (SR), die neben den Führungsrollen platziert und an ihren seitlichen Teilen mit Förderschnecken versehen ist, wobei die Schaberwalze einen Schaberflügel (SW) aufweist, der an der Walze zwischen den Förderschnecken angebracht ist und aus der Oberfläche der Walze herausragt, um die Führungswalzen von Erntegut zu reinigen.

## Revendications

1. Presse à balles (1) pour former des balles rondes de récoltes, incluant :
- un châssis fournissant un volume interne ;
- une unité de ramassage (2) fixée au châssis et configurée pour ramasser les récoltes à partir du sol et les introduire dans la presse à balles (1), l'unité d'alimentation ayant une entrée faisant face au sol et une sortie faisant face au volume interne ;
- une chambre de compression (C) pour comprimer les récoltes pour former la balle, la chambre de compression étant d'un diamètre variable, dans laquelle les récoltes sont alimentées dans la chambre de compression à partir de la sortie de l'unité d'alimentation dans une direction d'alimentation (D) ;
- une pluralité de rouleaux de guidage (3) placés à l'intérieur du volume interne et incluant une paire de rouleaux d'entrée (3E) ;
- une pluralité de courroies (4) placées côte à côte dans le volume interne et enroulées autour des rouleaux de guidage de manière à définir une boucle sans fin (5), la boucle étant flexible pour délimiter la chambre de compression, dans laquelle les rouleaux de guidage sont rotatifs pour entraîner les courroies autour de la boucle,
dans laquelle la presse à balles comprend en outre un séparateur de courroie (8) pour séparer chaque courroie de la pluralité de courroies de la courroie adjacente, le séparateur de courroie ayant des séparations correspondant en nombre au nombre de la pluralité de courroies, dans laquelle chaque courroie de la pluralité de courroies se trouve dans un plan qui est orienté longitudinalement de sorte que la pluralité de courroies, lorsqu'elles sont tendues entre la pluralité de rouleaux, sont orientées le long d'une direction longitudinale (L), **caractérisée en ce qu'**au moins une partie du séparateur de courroie est mobile dans une direction parallèle et transversale à la direction longitudinale.

2. Presse à balles (1) selon la revendication 1, dans laquelle le séparateur de courroie (8) comprend une portion fixe (801) et une portion mobile (802), dans laquelle la portion fixe est une barre fixée au châssis et s'étendant le long de la direction transversale entre une première extrémité et une seconde extrémité et la portion mobile est un peigne relié de manière mobile à la barre au niveau d'une partie centrale de celle-ci.

3. Presse à balles (1) selon la revendication 2, dans laquelle la portion mobile (802) du séparateur de courroie est configurée pour coulisser par rapport à la barre fixe.

4. Presse à balles (1) selon la revendication 2 ou 3, dans laquelle le séparateur de courroie (8) a des éléments d'arrêt et dans laquelle la portion mobile (802) du séparateur de courroie est configurée pour se déplacer le long d'un trajet spécifique ayant une longueur déterminée, les éléments d'arrêt étant configurés pour arrêter la portion mobile du séparateur de courroie lorsque la portion mobile arrive à la fin dudit trajet, de sorte que la portion mobile est pourvue d'un mouvement limité.

5. Presse à balles (1) selon l'une quelconque des revendications précédentes 2 à 4, dans laquelle si n=nombre de courroies (4), le séparateur de courroie (8) a N dents, où N=n+1, et dans laquelle la portion mobile du séparateur de courroie inclut N-2 dents.

6. Presse à balles (1) selon l'une quelconque des revendications précédentes, dans laquelle l'au moins une partie du séparateur de courroie (8) est configurée pour avoir un mouvement libre à la suite du déplacement des courroies de la pluralité de courroies (4) et sans autre force d'entraînement.

7. Presse à balles (1) selon l'une quelconque des revendications précédentes, comprenant des chaînes passant sur les rouleaux de guidage (3), dans laquelle le côté interne de la chaîne à proximité des rouleaux est lubrifié avec du liquide de lubrification de sorte que le liquide de lubrification est distribué sur toute la chaîne en raison de la force centrifuge, dans laquelle le côté interne de la chaîne à proximité des rouleaux et en amont du rouleau en fonction de la rotation de la chaîne par rapport au rouleau est lubrifié avec le liquide de lubrification.

8. Presse à balles (1) selon l'une quelconque des revendications précédentes, comprenant en outre un rouleau de raclage (SR) placé à proximité des rouleaux de guidage (3), le rouleau ayant des vis sans fin au niveau des parties latérales et étant configuré pour nettoyer les rouleaux de guidage des récoltes.

9. Presse à balles (1) selon la revendication 9, dans laquelle le rouleau a une aile de raclage (SW) fixée au rouleau entre les vis sans fin et faisant saillie de la surface du rouleau pour nettoyer les rouleaux de guidage des récoltes.

10. Presse à balles (1), selon la revendication 9, dans laquelle l'aile de raclage se compose de parties latérales et d'une partie centrale, les parties latérales étant des extensions des vis sans fin et dans laquelle la partie centrale est placée sur le rouleau de raclage entre les parties latérales et fait saillie depuis la surface du rouleau dans une direction différente de la direction de projection des parties latérales de l'aile de raclage.

11. Presse à balles (1) selon la revendication 10, dans laquelle les parties latérales et la partie centrale de l'aile de raclage forment un angle de 180°.

12. Presse à balles (1) selon l'une quelconque des revendications précédentes, dans laquelle la pluralité de courroies (4) inclut quatre courroies.

13. Procédé de formation de balles rondes, comprenant les étapes suivantes :
- fournir une presse à balles (1) avec une pluralité de rouleaux de guidage (3) placés à l'intérieur d'un volume interne de la presse à balles et incluant une paire de rouleaux d'entrée (3E) ;
- placer une pluralité de courroies (4) côte à côte dans le volume interne et les enrouler autour des rouleaux de guidage de manière à définir une boucle sans fin (5), la boucle étant flexible pour délimiter une chambre de compression (C) ;
- faire tourner les rouleaux de guidage (3) pour entraîner les courroies autour de la boucle ;
- introduire les récoltes dans la chambre de compression (C) de la presse à balles (1) par l'intermédiaire d'une unité de ramassage (2) dans une direction d'alimentation (D) ;
- comprimer les récoltes pour former la balle dans la chambre de compression (C) *;*
- séparer chaque courroie de la pluralité de courroies de la courroie adjacente par l'intermédiaire d'un séparateur de courroie (8), le séparateur de courroie ayant des séparations correspondant en nombre au nombre de la pluralité de courroies ;
- placer chaque courroie de la pluralité de courroies dans un plan qui est orienté longitudinalement de sorte que la pluralité de courroies, lorsqu'elles sont tendues entre la pluralité de rouleaux, sont orientées le long d'une direction longitudinale,
**caractérisé en ce qu'**au moins une partie du séparateur de courroie est mobile dans une direction parallèle et transversale à la direction longitudinale.

14. Procédé selon la revendication 13, comprenant les étapes de:
- faire passer des chaînes sur les rouleaux de guidage (3),
- appliquer du liquide de lubrification sur le côté interne des chaînes, à proximité des rouleaux de guidage de sorte que le liquide de lubrification est distribué sur toute la chaîne en raison de la force centrifuge,
- lubrifier le côté interne de la chaîne à proximité des rouleaux et en amont du rouleau en fonction de la rotation de la chaîne par rapport au rouleau avec le liquide de lubrification.

15. Procédé selon l'une quelconque des revendications précédentes 13 à 14, comprenant une étape de nettoyer les rouleaux de guidage des récoltes par l'intermédiaire d'un rouleau de raclage (SR) qui est placé à proximité des rouleaux de guidage et est pourvu de vis sans fin au niveau des parties latérales, dans lequel le rouleau de raclage a une aile de raclage (SW) fixée au rouleau entre les vis sans fin et faisant saillie de la surface du rouleau pour nettoyer les rouleaux de guidage des récoltes.
